# EUROPÄISCHE PATENTSCHRIFT

(11) **EP 2 857 129 B1**
(45) Veröffentlichungstag und Bekanntmachung des Hinweises auf die Patenterteilung: **16.11.2016**
(21) Anmeldenummer: 14154112.8
(22) Anmeldetag: 06.02.2014
(51) Int. Cl.: B23B 31/02, B23B 31/20

(54) **Werkzeughalter mit einer mit einem Werkzeug verspannbaren Spannzange**
Tool holder with a collet chuck for clamping a tool
Porte-outil avec mandrin pour le serrage d'un outil

(30) Priorität: 02.10.2013 EP 13187054
(43) Veröffentlichungstag der Anmeldung: 08.04.2015
(73) Patentinhaber: Eugen Fahrion GmbH & Co. KG, 73667 Kaiserbach (DE)
(72) Erfinder: Ulrich Fahrion, 73667 Kaisersbach (DE); Markus Geiger, 74405 Gaildorf (DE); Salvatore Cavallaro, 73614 Schorndorf (DE)
(74) Vertreter: DREISS Patentanwälte PartG mbB

(56) Entgegenhaltungen:
- EP-A2- 0 481 220
- US-A- 3 618 962
- US-A- 4 377 292
- US-A- 5 234 296

## Beschreibung

Die Erfindung betrifft einen Werkzeughalter mit den Merkmalen des Oberbegriffs des Patentanspruchs 1.

Ein derartiger Werkzeughalter zum Einspannen des Schafts eines Werkzeugs ist aus der EP 2 266 732 A1 bekannt (vergleiche Fig. 5). Dieser Werkzeughalter weist einen Spannkeil auf, der mit spiraligen Rippen versehen ist, die mit einer gewendelten Nut einer Spannzange in Eingriff stehen. Zum Einspannen eines Werkzeugschafts ist es erforderlich, den Spannkeil und ein einzuspannendes Werkzeug erst miteinander zu fügen und dann als Baugruppe mit der Spannzange zu verschrauben. Darüber hinaus muss ein Spiel zwischen den Rippen des Spannkeils und der Nut der Spannzange mit Hilfe eines in axialer Richtung wirkenden Schraubbolzens ausgeglichen werden. Insgesamt ist das Einspannen eines Werkzeugs relativ aufwändig und erfordert einen hohen zeitlichen Aufwand.

Außerdem ist es bei dem aus der EP 2 266 732 A1 nachteilig, dass die Spannzange und der Spannkeil mit relativ komplex zu fertigenden Gewindeelementen (Rippen und Nut) versehen werden müssen, was mit einem entsprechend hohen Herstellungsaufwand einhergeht.

Vorteilhaft bei dem aus der EP 2 266 732 A1 bekannten Werkzeughalter ist die Möglichkeit, genormte Werkzeuge verwenden zu können, insbesondere Werkzeuge mit einem seitlichen Mitnahmebereich gemäß DIN 1835-1, Form B. Solche Mitnahmebereiche sind auch unter der Bezeichnung "Weldonfläche" bekannt und bilden im einfachsten Fall einen Teil einer Verdrehsicherung eines Werkzeugs in einem Weldonspannfutter, wobei die Weldonfläche des Werkzeugs als Gegenfläche für die Stirnfläche einer das Weldonspannfutter durchsetzenden Sicherungsschraube dient.

Aus der US 5,234,296 A ist ein Werkzeughalter bekannt, mit einem Futter, das einen spannzangenartigen Abschnitt zur Einspannung eines Werkzeugs aufweist. Dieser Werkzeughalter weist ein als Auszugssicherung wirksames Sicherungselement auf, das sich an einer Spannmutterhülse abstützt.

Aus der EP 0 481 220 A2 ist ein Spannfutter bekannt. Zur Einspannung des Werkzeugs in einem Körper des Spannfutters ist ein zwischen einer Weldonfläche des Werkzeugs und dem Körper des Spannfutters angeordnetes Sperrglied vorgesehen. Das rückwärtige Ende des Werkzeugs wird mittels einer zusätzlichen Druckstange druckbeaufschlagt, sodass das Sperrglied unter verspannender Anlage mit einer rückwärtigen Begrenzungsfläche der Weldonfläche und mit einer Begrenzung eines in dem Körper des Spannfutters ausgebildeten Kanals gehalten werden kann.

Hiervon ausgehend liegt der vorliegenden Erfindung die Aufgabe zugrunde, einen einfach herstellbaren Werkzeughalter zu schaffen, der ein einfaches und schnelles Einspannen eines Werkzeugs ermöglicht. Vorzugsweise soll der Werkzeughalter für Werkzeuge mit einem seitlichen Mitnahmebereich in Form einer Weldonfläche geeignet sein.

Diese Aufgabe wird bei einem Werkzeughalter der eingangs genannten Art erfindungsgemäß durch die kennzeichnenden Merkmale des Patentanspruchs 1 gelöst.

Im Rahmen der vorliegenden Erfindung wird unter einem Werkzeughalter eine Baugruppe verstanden, welche mindestens die Bauteile Spannzange und Sicherungselement umfasst. Der erfindungsgemäße Werkzeughalter kann zusätzlich auch weitere Bauteile umfassen, insbesondere eine Spannzangenaufnahme zur Aufnahme der Spannzange und zur Verbindung mit einer Werkzeugmaschine und/oder eine Spannmutter zum Verschrauben mit der Spannzangenaufnahme zum Einspannen der Spannzange.

Der erfindungsgemäße Werkzeughalter ermöglicht eine einfache Montage eines Sicherungselements, welches aufgrund seiner Keilform in der Eingriffslage in einem selbsthemmenden Eingriff mit dem Werkzeug und mit der Spannzange steht. Dabei ist es vorteilhaft, dass die auf das Werkzeug wirkenden Spannkräfte der Spannzange von dem Sicherungselement nicht beeinflusst werden und das Sicherungselement erst bei Überschreitung dieser Spannkräfte als Sperrglied wirksam werden muss. Ein Mikrokriechen oder Mikrowandern des Werkzeugs innerhalb der Spannzange kann auf diese Weise verhindert werden.

Die keilförmige Ausgestaltung des Sicherungselements ermöglicht es, einen selbsthemmende Wirkung bereitzustellen. Insbesondere kann eine in Auszugsrichtung auf das Werkzeug wirkende Auszugskraft derart in die Spannzange abgeleitet werden, dass eine der Auszugskraft entgegenwirkende Kraftkomponente entsteht. Je höher die Auszugskraft ist, desto höher ist auch diese Kraftkomponente.

Vorzugsweise ist das Sicherungselement nicht nur als Auszugssicherung, sondern gleichzeitig als Verdrehsicherung gegen ein durch Verdreh- und/oder Torsionskräfte bedingtes Verdrehen des Werkzeugs um eine zentrale Werkzeugachse innerhalb der Spannzange wirksam. Ein solches Sicherungselement kann auch als Auszugs-/Verdrehsicherungselement bezeichnet werden.

Der erfindungsgemäße Werkzeughalter ermöglicht es, die grundsätzlichen Vorteile, die sich durch Verwendung einer Spannzange ergeben (z.B. Einspannen eines Werkzeugs mittels einer Mehrzahl von Spannzangensegmenten, höchste Rundlaufgenauigkeit, Bereitstellung einer Dämpfung, Einspannung eines Werkzeugs ist unabhängig von Toleranzen des Werkzeugschaftdurchmessers möglich) zu erhalten und zusätzlich einen montagefreundlichen Werkzeughalter mit einer zuverlässigen Sicherung gegen ein Ausziehen und/oder Verdrehen des Werkzeugs bereitzustellen.

Vorzugsweise weist die Spannzange des erfindungsgemäßen Werkzeughalters sich parallel zu einer zentralen Achse der Spannzange erstreckende Schlitze auf, welche die Wandung der Spannzange in radialer Richtung nicht vollständig durchdringen und welche sich vorzugsweise über die gesamte Länge der Spannzange erstrecken. Auf diese Weise kann die erfindungsgemäße Auszugssicherung mit besonders hohen Rundlaufgenauigkeiten und einer besonders hohen Vibrationsdämpfung kombiniert werden.

Bei einer besonders bevorzugten Ausführungsform der Erfindung ist vorgesehen, dass das Sicherungselement an der Spannzange zwischen einer radial inneren Eingriffslage zum Eingriff des Sicherungselements in einen seitlichen Mitnahmebereich des Werkzeugs und einer radial äußeren Montagelage zum Einführen des Schafts in die Spannzange bewegbar gelagert ist. Die Lagerung des Sicherungselements an der Spannzange ermöglicht die Bereitstellung einer Baugruppe, welche in einfacher Weise mit einem einzuspannenden Werkzeug gefügt werden kann. Hierbei ist das Sicherungselement zwischen einer Eingriffslage bzw. einer Gebrauchslage, in welcher das Sicherungselement mit einem seitlichen Mitnahmebereich eines Werkzeugs zusammenwirkt, und einer Montagelage, in welcher ein insbesondere zylindrischer Schaft eines Werkzeugs in die Spannzange einführbar ist, bewegbar.

Für einen einfachen Aufbau des Werkzeughalters ist es besonders bevorzugt, dass das Sicherungselement längs einer geradlinigen Bewegungsachse bewegbar ist.

Es ist bevorzugt, dass die Bewegungsachse relativ zu einer zu einer zentralen Achse der Spannzange senkrechten Achse nach hinten geneigt ist, beispielsweise um einen Winkel von 1° bis 89°, vorzugsweise um einen Winkel von 30° bis 60°, insbesondere um einen Winkel von 45°. Diese Orientierungen der Bewegungsachse unterstützen eine "Verkeilung" des Sicherungselements mit der Spannzange.

Für eine möglichst einfache Lagerung des Sicherungselements an der Spannzange ist es bevorzugt, wenn die Spannzange eine Materialaussparung aufweist, in welcher das Sicherungselement verschiebbar aufgenommen ist. Im Zuge der Verschiebung des Sicherungselements bewegt sich dieses zwischen der Eingriffslage und der Montagelage.

Bevorzugt ist es, dass die Materialaussparung eine Führungsfläche zur Führung des Sicherungselements umfasst, sodass im Prinzip auch denkbare, separate Führungseinrichtungen nicht erforderlich sind.

Besonders bevorzugt ist es, wenn die Materialaussparung einen vorderen Abschnitt aufweist, der mit einer vorderen Kraftübertragungsfläche des Sicherungselements zusammenwirkt. Dieser vordere Abschnitt hat vorzugsweise eine einer Neigung der vorderen Kraftübertragungsfläche entsprechende Neigung, welche ausgehend von einer zu einer zentralen Achse der Spannzange senkrechten Achse beispielsweise 1° bis 89°, vorzugsweise 30° bis 60°, insbesondere 45°, beträgt.

Bevorzugt ist es ferner, wenn die Materialaussparung zu einer äußeren Mantelfläche der Spannzange hin offen ist. Dies ermöglicht es, das Sicherungselement von radial außen her in die Materialaussparung der Spannzange einzusetzen und insbesondere im Bereich der offenen Mantelfläche eine Kraftbeaufschlagungseinrichtung oder Abschnitte der Kraftbeaufschlagungseinrichtung anzuordnen.

Bei einer weiteren Ausführungsform der Erfindung ist vorgesehen, dass die Materialaussparung zur Definition der Eingriffslage und zur Begrenzung eines Bewegungsweges des Sicherungselements eine Begrenzungsfläche aufweist. Eine solche Begrenzungsfläche ist insbesondere dann vorteilhaft, wenn das Sicherungselement mit einer nach radial innen gewandten Stirnfläche nicht in Kontakt mit einer nach radial außen gewandten Mitnahmefläche des seitlichen Mitnahmebereichs des Werkzeugs treten soll, sondern einen Kontakt zwischen Sicherungselement und Mitnahmebereich des Werkzeugs ausschließlich über in Auszugsrichtung wirksame Kraftübertragungsflächen erfolgen soll.

Bei einer besonders bevorzugten Ausführungsform ist vorgesehen, dass das Sicherungselement mit einer Kraftbeaufschlagungseinrichtung zusammenwirkt, welche eine in Richtung Eingriffslage wirkende Fügekraft auf das

Sicherungselement zum Fügen des Sicherungselements mit dem Mitnahmebereich bereitstellt. Eine solche Kraftbeaufschlagungseinrichtung ermöglicht eine selbsttätige Überführung des Sicherungselements aus der Montagelage in die Eingriffslage. Dennoch kann das Sicherungselement in einfacher Weise aus der Eingriffslage in die Montagelage überführt werden, nämlich indem eine Montagekraft aufgewandt wird, die betragsmäßig höher ist als die Fügekraft, die von der Kraftbeaufschlagungseinrichtung bereitgestellt wird.

Die Kraftbeaufschlagungseinrichtung hat den weiteren Vorteil, dass sie in der Eingriffslage des Sicherungselements im Sinne einer Vorspannung auf das Sicherungselement einwirkt. Hierdurch können üblicherweise erforderliche, in axialer Richtung des Werkzeugs wirkende und separat bereitgestellte Spanneinrichtungen (bspw. Andrückschrauben) entfallen.

Eine weiter vereinfachte Montage ergibt sich, wenn die Kraftbeaufschlagungseinrichtung an der Spannzange angeordnet ist. Für eine einfache Handhabung der Bauteile des Werkzeughalters ist es besonders bevorzugt, dass die Kraftbeaufschlagungseinrichtung mit der Spannzange verbunden ist.

Bei einer besonders bevorzugten Ausführungsform ist vorgesehen, dass die Kraftbeaufschlagungseinrichtung mittels Überführung des Sicherungselements aus der Eingriffslage in die Montagelage aufladbar ist. Dies bedeutet, dass das Sicherungselement bei seiner Überführung aus der Eingriffslage in die Montagelage gegen die Kraftbeaufschlagungseinrichtung wirkt und Energie, insbesondere eine Verformungsenergie, in der Kraftbeaufschlagungseinrichtung gespeichert wird. Diese Energie kann dann zur Bereitstellung der Fügekraft, welche in Richtung Eingriffslage wirkt, genutzt werden.

Für einen einfachen Aufbau einer Kraftbeaufschlagungseinrichtung wird vorgeschlagen, dass die Fügekraft eine Druckkraft ist.

Vorzugsweise ist die Kraftbeaufschlagungseinrichtung elastisch verformbar, sodass bei einer Überführung des Sicherungselements aus der Eingriffslage in die Montagelage Verformungsenergie in der Kraftbeaufschlagungseinrichtung gespeichert werden kann.

Bei der Kraftbeaufschlagungseinrichtung kann es sich um ein Federelement handeln. Dieses kann beispielsweise aus einem Metall hergestellt sein, ist jedoch vorzugsweise aus einem Elastomer hergestellt. Dies vereinfacht die Bereitstellung einer Kraftbeaufschlagungseinrichtung mit raumsparenden Geometrien.

Bevorzugt ist es beispielsweise, dass die Kraftbeaufschlagungseinrichtung ringförmig, ringsegmentförmig oder membranförmig ausgebildet ist, sodass eine platzsparende Anordnung der Kraftbeaufschlagungseinrichtung an dem Werkzeughalter, insbesondere an der Spannzange des Werkzeughalters, ermöglicht wird.

Für eine weitere Vereinfachung der Handhabung des Werkzeughalters wird vorgeschlagen, dass die Kraftbeaufschlagungseinrichtung mit dem Sicherungselement verbunden ist. Dies ermöglicht es außerdem, eine besonders einfach aufgebaute Verliersicherung für das Sicherungselement zu schaffen.

Eine bevorzugte Möglichkeit zur Verbindung der Kraftbeaufschlagungseinrichtung mit dem Sicherungselement ist eine Verklebung. Eine Verklebung ermöglicht eine raumsparende Verbindung eines Sicherungselements und einer Kraftbeaufschlagungseinrichtung, insbesondere für den Fall, dass die genannten Bauteile aus unterschiedlichen Werkstoffen hergestellt sind.

Weitere Merkmale und Vorteile der Erfindung sind Gegenstand der nachfolgenden Beschreibung und der zeichnerischen Darstellung bevorzugter Ausführungsbeispiele.

In den Zeichnungen zeigen:
- Fig. 1: eine perspektivische Explosionsdarstellung einer ersten Ausführungsform eines Werkzeughalters;
- Fig. la: eine Draufsicht des Sicherungselements des Werkzeughalters gemäß Fig. 1;
- Fig. 1b: eine Unteransicht des Sicherungselements des Werkzeughalters gemäß Fig. 1;
- Fig. 2: eine perspektivische Ansicht des Werkzeughalters gemäß Fig. 1;
- Fig. 3: eine Seitenansicht des Werkzeughalters gemäß Fig. 1 in einem Längsschnitt;
- Fig. 4a bis 4c: der Fig. 3 entsprechende Seitenansichten einander folgender Montageschritte gemäß einer ersten Alternative;
- Fig. 5: einen in Fig. 4c mit V bezeichneten Ausschnitt in vergrößerter Darstellung;
- Fig. 6a: bis 6b der Fig. 3 entsprechende Seitenansichten einander folgender Montageschritte gemäß einer zweiten Alternative;
- Fig. 7: einen in Fig. 6b mit VII bezeichneten Ausschnitt in vergrößerter Darstellung;
- Fig. 8: eine perspektivische Explosionsdarstellung einer weiteren Ausführungsform eines Werkzeughalters;
- Fig. 9: eine perspektivische Ansicht des Werkzeughalters gemäß Fig. 8;
- Fig. 10: eine Seitenansicht des Werkzeughalters gemäß Fig. 8 in einem Längsschnitt;
- Fig. 11a bis 11c: der Fig. 10 entsprechende Seitenansichten einander folgender Montageschritte;
- Fig. 12: einen in Fig. 11c mit XII bezeichneten Ausschnitt in vergrößerter Darstellung;
- Fig. 13: eine perspektivische Explosionsdarstellung einer weiteren Ausführungsform eines Werkzeughalters;
- Fig. 14: eine perspektivische Ansicht des Werkzeughalters gemäß Fig. 13;
- Fig. 15: eine Seitenansicht des Werkzeughalters gemäß Fig. 13 in einem Längsschnitt;
- Fig. 16: eine perspektivische Explosionsdarstellung einer weiteren Ausführungsform eines Werkzeughalters;
- Fig. 17: eine perspektivische Ansicht des Werkzeughalters gemäß Fig. 16; und
- Fig. 18: eine Seitenansicht des Werkzeughalters gemäß Fig. 16 in einem Längsschnitt.

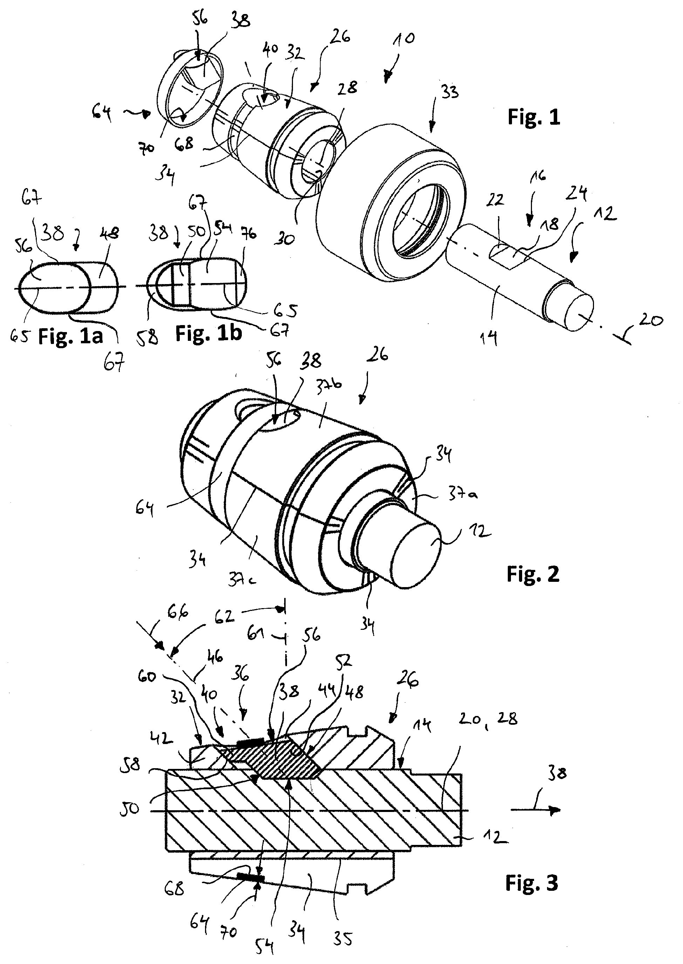

Eine Ausführungsform eines Werkzeughalters ist in Figur 1 insgesamt mit dem Bezugszeichen 10 bezeichnet. Der Werkzeughalter 10 dient zum Halten eines Werkzeugs 12, das in Figur 1 abschnittsweise dargestellt ist und einen insbesondere zylindrischen Schaft 14 aufweist. An dem Schaft 14 ist ein seitlicher Mitnahmebereich 16 vorgesehen, insbesondere in Form einer Weldonfläche. Der Mitnahmebereich 16 umfasst eine nach radial außen weisende, vorzugsweise ebene Grundfläche 18, welche bezogen auf eine zentrische Werkzeugachse 20 des Werkzeugs 12 tangential ausgerichtet ist. Die Grundfläche 18 grenzt an eine rückwärtige Keilfläche 22 und an eine vordere Keilfläche 24.

Der Werkzeughalter 10 umfasst eine Spannzange 26, welche eine bezogen auf eine zentrische Achse 28 der Spannzange 26 konzentrische Spannfläche 30 aufweist, die insbesondere zylindrisch ist und zum Einspannen des Schaft 14 des Werkzeugs 12 dient.

Die Spannzange 26 weist eine äußere Mantelfläche 32 auf, welche insbesondere konisch ist.

Die Spannzange 26 wird in einen an sich bekannten und daher nicht dargestellten Spannzangenhalter eingesetzt, der eine zu der Mantelfläche 32 der Spannzange 26 komplementäre Aufnahmefläche aufweist, die mit der Mantelfläche 32 der Spannzange 26 verspannt wird, und zwar unter Verwendung einer Spannmutter 33, welche in an sich bekannter Art und Weise mit dem Spannzangenhalter verschraubt wird (vergleiche beispielsweise EP 1 616 647 B1).

Die Spannzange 26 weist über den Umfang um die zentrische Achse 28 verteilt angeordnete Schlitze 34 auf, welche parallel zu der zentrischen Achse 28 verlaufen. Die Schlitze 34 ermöglichen die Begrenzung von zueinander benachbarten Spannzangensegmenten, welche relativ zueinander verformbar sind, um ein Einspannen des Schafts 14 in der Aufnahmefläche 30 der Spannzange 26 zu bewirken.

Vorzugsweise sind die Schlitze 34 so dimensioniert, dass sie sich zwar entlang der gesamten Länge (also parallel zu der zentralen Spannzangenachse 28) der Wandung 42 der Spannzange 26 erstrecken, die Wandung 42 jedoch in radialer Richtung nicht vollständig durchdringen, sondern nur bis zu einer in radialer Richtung wirksamen Begrenzung 35 reichen (vergleiche Fig. 3). Auf diese Weise sind zueinander verformbare Spannzangensegmente 37a, 37b, 37c (vergleiche Fig. 2) gebildet. Vorzugsweise sind maximal drei Spannzangensegmente vorgehen, insbesondere drei Spannzangensegmente.

Der Werkzeughalter 10 umfasst eine nachfolgend beschriebene Auszugssicherung 36 (vergleiche Figur 3), welche ein an dem Werkzeughalter 10 gehaltenes Werkzeug 12 daran hindert, in einer Auszugsrichtung 38 aus der Spannzange 26 des Werkzeughalters 10 herausgezogen zu werden.

Die Auszugssicherung 36 umfasst ein insbesondere keilförmiges Sicherungselement 38, welches eine auf das Werkzeug 12 wirkende Auszugskraft auf die Spannzange 26 überträgt.

Das Sicherungselement 38 ist in einer Materialaussparung 40 einer Wandung 42 des Spannzangensegments 37b angeordnet. Die Materialaussparung 40 umfasst eine umfangsseitig geschlossene Führungsfläche 44 zur vorzugsweise spielbehafteten Führung des Sicherungselements 38 entlang einer Bewegungsachse 46 innerhalb der Materialaussparung 40. Die Bewegungsachse 46 ist vorzugsweise gradlinig und ist insbesondere so ausgerichtet, dass eine gedachte Verlängerung der Bewegungsachse 46 sich mit der zentrischen Achse 28 der Spannzange 26 schneidet.

Die Bewegungsachse 46 ist relativ zu einer zu der zentrischen Achse 28 der Spannzange senkrechten Achse 61 um einen Winkel 62 nach hinten geneigt. Ein besonders bevorzugter Winkel 62 ist 45°.

Ferner ist es bevorzugt, dass die Bewegungsachse 46 bezogen auf die zentrisch Achse 28 der Spannzange 26 in radialer Richtung verläuft oder, wie in der Zeichnung dargestellt, in einer bezogen auf eine radiale Richtung geneigten Richtung.

Das Sicherungselement 38 weist eine vordere Kraftübertragungsfläche 48 und eine rückwärtige Kraftübertragungsfläche 50 auf. Die Flächen 48 und 50 verlaufen vorzugsweise parallel zueinander und insbesondere parallel zu der Bewegungsachse 46. Die rückwärtige Kraftübertragungsfläche 50 wirkt mit der rückwärtigen Keilfläche 22 des Mitnahmebereichs 16 zusammen; die vordere Kraftübertragungsfläche 48 wirkt mit einem vorderen Abschnitt 52 der Führungsfläche 44 der Materialaussparung 40 zusammen.

Es ist bevorzugt, dass die Neigung der rückwärtigen Keilfläche 22 des Mitnahmebereichs 16 identisch ist zu der Neigung der rückwärtigen Kraftübertragungsfläche 50 des Sicherungselements 38.

In entsprechender Weise ist es bevorzugt, dass die Neigung des vorderen Abschnitts 52 der Materialaussparung 40 identisch ist zu der Neigung der vorderen Kraftübertragungsfläche 48 des Sicherungselements 38.

Ferner ist es bevorzugt, dass der vordere Abschnitt 52 der Materialaussparung eine der Neigung der rückwärtigen Keilfläche 22 des Mitnahmebereichs 16 entsprechende Neigung aufweist. Es ist aber auch möglich, dass die Neigung des vorderen Abschnitts 52 bezogen auf die Achse 61 größer ist als die Neigung der Keilfläche 22.

Das Sicherungselement 38 umfasst ferner eine nach radial innen weisende Innenfläche 54, welche im montierten Zustand des Werkzeugs 12 in der Spannzange 26 im Wesentlichen parallel zu der Grundfläche 18 des Mitnahmebereichs 16 des Werkzeugs 12 ausgerichtet ist. Das Sicherungselement 38 weist ferner einen nach radial außen weisende Außenfläche 56 auf, welche beispielsweise im Wesentlichen parallel zu der Mantelfläche 32 der Wandung 42 der Spannzange 26 verläuft.

Es ist bevorzugt, jedoch nicht zwingend, dass ein Abstand zwischen der rückwärtigen Kraftübertragungsfläche 50 und der vorderen Kraftübertragungsfläche 48 des Sicherungselements 38 kleiner ist als ein Abstand zwischen dem vorderen Abschnitt 52 der Führungsfläche 44 und einem rückwärtigem Abschnitt 58 der Führungsfläche 44. Zum Ausgleich eines solchen Abstandsunterschieds kann das Sicherungselement 38 einen Vorsprung 60 aufweisen, der die Außenfläche 56 des Sicherungselements 38 im Vergleich zu der Innenfläche 54 des Sicherungselements 38 erweitert. Der Vorsprung 60 hat eine Abdeckungsfunktion und verhindert ein Eindringen von Spänen in die Materialaussparung 40.

Das Sicherungselement 38 erstreckt sich entlang einer Keillängsachse 65 (vergleiche Fig. 1a und 1b), welche im an der Spannzange 26 angeordneten Zustand des Sicherungselements 38 vorzugsweise parallel zu der zentralen Spannzangenachse 28 verläuft. Das Sicherungselement 38 weist voneinander abgewandte Seitenflächen 67 auf, welche zumindest abschnittsweise im Wesentlichen parallel oder tangential zu der Keillängsachse 65 verlaufen und gemeinsam mit entsprechenden Anlageflächen der Materialaussparung 40 der Spannzange 26 als Verdrehsicherung gegen eine Verdrehung des Werkzeugs 12 um dessen Werkzeugachse 20 wirksam sind. Hierbei stützt sich die Innenfläche 54 oder zumindest eine Begrenzungskante der Innenfläche 54 des Sicherungselements 38 an der Grundfläche 18 des Mitnahmebereichs 18 des Werkzeugs 12 ab.

Das Sicherungselement 38 wirkt mit einer Kraftbeaufschlagungseinrichtung 64 zusammen, die eine Fügekraft 66 bereitstellt, welche das Sicherungselement 38 entlang der Bewegungsachse 46 nach radial innen (also in Richtung auf die zentrische Achse 28 des Spannzangenhalters 26) drückt.

Die Kraftbeaufschlagungseinrichtung 64 ist an der Spannzange 26 angeordnet, insbesondere dort verliersicher gehalten.

Beispielsweise ist die Kraftbeaufschlagungseinrichtung 64 ringförmig und erstreckt sich konzentrisch zu der zentrischen Achse 28 der Spannzange 26. Zur Anordnung der ringförmigen Kraftbeaufschlagungseinrichtung 64 an der Spannzange 26 weist die Wandung 42 der Spannzange 26 eine Ringnut 68 auf, deren Nutboden relativ zu der Mantelfläche 32 der Spannzange 26 nach radial innen versetzt ist. Vorzugsweise ist eine Tiefe 70 der Ringnut 68 größer als eine in derselben Richtung gemessene Wandstärke der Kraftbeaufschlagungseinrichtung 64, sodass die Kraftbeaufschlagungseinrichtung 64 in einem an der Spannzange 26 angeordneten Zustand nicht nach radial außen über die Mantelfläche 32 der Spannzange 26 hervorsteht.

Vorzugsweise ist die Kraftbeaufschlagungseinrichtung 64 aus einem Elastomer hergestellt. In einem entspannten Zustand der Kraftbeaufschlagungseinrichtung 64 (vergleiche Figur 1) ist der Innendurchmesser des Ringkörpers der Kraftbeaufschlagungseinrichtung 64 kleiner als der Durchmesser eines Bodens der Ringnut 68. Dies hat zur Folge, dass bei Anordnung des Ringkörpers der Kraftbeaufschlagungseinrichtung 64 in der Ringnut 68 der Ringkörper unter einer Vorspannung steht und in Umfangsrichtung gesehen auf Zug beansprucht ist.

Eine ringförmige Innenfläche 70 des Ringkörpers der Kraftbeaufschlagungseinrichtung 64 wirkt im Bereich der Außenfläche 56 des Sicherungselements 38 mit dem Sicherungselement 38 zusammen, um die Fügekraft 66 auf das Sicherungselement 38 auszuüben. Vorzugsweise ist die Innenfläche 70 der Kraftbeaufschlagungseinrichtung 64 mit der Außenfläche 56 des Sicherungselements 38 verklebt, sodass das Sicherungselement 38 und die Kraftbeaufschlagungseinrichtung 64 eine einfach handhabbare Baugruppe bilden. Hierdurch kann auch vermieden werden, dass das Sicherungselement 38 sich aus einem Verbund mit der Spannzange 26 lösen kann, wenn kein Werkzeug 12 bzw. kein Schaft 14 eines Werkzeugs 12 in die Spannzange 26 eingeführt ist.

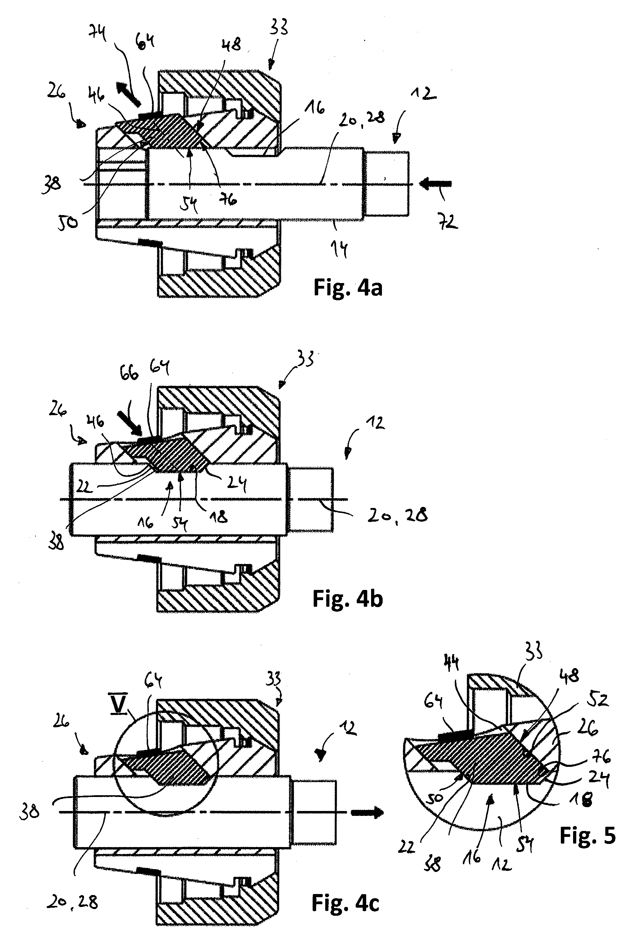

Nachfolgend wird die Montage eines Werkzeugs 12 in die Spannzange 26 unter Bezugnahme auf die Figuren 4a bis 5 beschrieben.

Zur Montage des Werkzeughalters 10 wird zunächst eine Baugruppe bereitgestellt, welche die Spannzange 26, das Sicherungselement 38 und die Kraftbeaufschlagungseinrichtung 64 umfasst. In diesem Bereitstellungszustand ist das Sicherungselement 38 mittels der Kraftbeaufschlagungseinrichtung 64 an dieser gehalten und nimmt längs der Bewegungsachse 46 eine radial innen angeordnete Lage ein, welche einer Eingriffslage gemäß Figur 4b entspricht.

Ausgehend von dieser radial innen angeordneten Lage bewirkt das Einführen des Schafts 14 eines Werkzeugs 12 in einer Einführrichtung 72 (vergleiche Figur 4a), dass die Außenfläche des Schafts 14 das Sicherungselement 38 entlang der Bewegungsachse 46 nach radial außen in die in Figur 4a dargestellte Montagelage überführt. Im Zuge des Einführens des Schafts 14 des Werkzeugs 12 in die Spannzange 26 wird durch Druck (beispielsweise durch Handkraft) auf das Werkzeug 12 in Einführrichtung 72 eine auf das Sicherungselement 38 wirkende Gegenkraft 74 erzeugt, die betragsmäßig größer ist als die in entgegengesetzter Richtung wirkende Fügekraft 66 der Kraftbeaufschlagungseinrichtung 64.

Zur Vereinfachung der Einführung des Schafts 14 in die Spannzange 26 und zur Vereinfachung der Überführung des Sicherungselements 38 aus einer radial inneren Lage in die in Figur 4a dargestellte Montagelage kann das Sicherungselement 38 eine zwischen der Innenfläche 54 und der vorderen Kraftübertragungsfläche 48 des Sicherungselements 38 angeordnete Schrägfläche 76 aufweisen. Vorzugsweise sind in einem in der Spannzange 26 montierten Zustand des Werkzeugs 12 die Schrägfläche 76 des Sicherungselements 38 und die vordere Keilfläche 24 des Mitnahmebereichs 16 des Werkzeugs 12 zueinander parallel.

Ausgehend von dem in Figur 4a dargestellten Zustand führt ein weiteres Einschieben des Schafts 14 des Werkzeugs 12 in die Spannzange 26 dazu, dass das Sicherungselement 38 längs der Bewegungsachse 46 mit dem Mitnahmebereich 16 des Schafts 14 fluchtet. Die von der Kraftbeaufschlagungseinrichtung 64 erzeugte Fügekraft 66 bewirkt dann eine selbsttätige Überführung des Sicherungselements 38 aus der Montagelage (Figur 4a) in eine Eingriffslage (Figur 4b), in welcher das Sicherungselement 38 so weit radial innen angeordnet ist, dass das Sicherungselement 38 zumindest abschnittsweise in den Mitnahmebereich 16 des Werkzeugs 12 eintaucht.

Bei dem in den Figuren 4a bis 5 dargestellten Ausführungsbeispiel ist ein Abstand zwischen der rückwärtigen Kraftübertragungsfläche 50 und der Schrägfläche 76 geringfügig kleiner als ein Abstand zwischen den Keilflächen 22 und 24 des Mitnahmebereichs 16. Dies hat zur Folge, dass die Innenfläche 54 des Sicherungselements in der Eingriffslage des Sicherungselements 38 mit der Grundfläche 18 des Mitnahmebereichs 16 in Kontakt steht.

Zum Ausgleich eines Spiels zwischen der rückwärtigen Kraftübertragungsfläche 50 des Sicherungselements 38 und der rückwärtigen Keilfläche 22 des Mitnahmebereichs 16 wird das Werkzeug 12 nach vorne gezogen (beispielsweise durch manuelles Ziehen an dem Werkzeug 12, in Figur 4c mit einem Pfeil angedeutet), sodass die rückwärtige Kraftübertragungsfläche 50 in Kontakt mit der rückwärtigen Keilfläche 22 gelangt und die vordere Kraftübertragungsfläche 48 an dem vorderen Abschnitt 52 der Führungsfläche 44 anliegt (vergleiche Figur 5). In diesem Zustand ist die Schrägfläche 76 des Sicherungselements 38 zu der vorderen Keilfläche 24 des Mitnahmebereichs 16 beabstandet; die Innenfläche des Sicherungselements 38 liegt an der Grundfläche 18 des Mitnahmebereichs 16 an.

Ausgehend von dem in Figur 4c dargestellten Zustand erfolgt eine Fertigmontage eines Werkzeughalters 10 durch Verschraubung der Spannmutter 33 mit einer an sich bekannten und daher nicht dargestellten Spannzangenaufnahme. Eine solche Spannzangenaufnahme bewirkt eine Verspannung der Spannzange 26 mit dem Schaft 14 des Werkzeugs 12. Die Spannzangenaufnahme dient außerdem zur Verbindung mit einer ebenfalls an sich bekannten und daher nicht dargestellten Werkzeugmaschine.

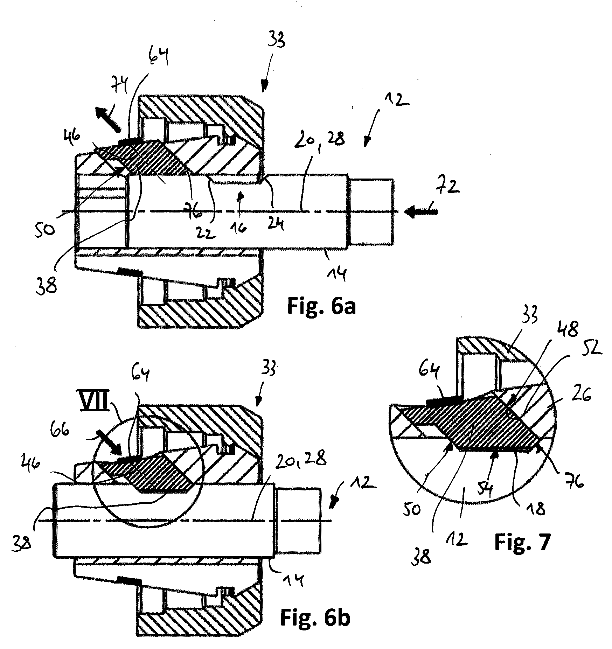

Nachfolgend wird eine Variante des vorstehend beschriebenen Werkzeughalters 10 erläutert und zwar unter Bezugnahme auf die Figuren 6a bis 7. Im Unterschied zu der vorstehend beschriebenen Ausführungsform eines Werkzeughalters 10 ist der Abstand zwischen der rückwärtigen Kraftübertragungsfläche 50 und der Schrägfläche 76 identisch mit dem Abstand zwischen den Keilflächen 22 und 24 des Mitnahmebereichs 16. Dies hat zur Folge, dass eine Überführung des Sicherungselements 38 ausgehend aus der in Figur 6a dargestellten Montagelage in die in Figur 6b dargestellte Eingriffslage damit einhergeht, dass ohne Spielausgleich ein Kontakt der rückwärtigen Kraftübertragungsfläche 50 des Sicherungselements 38 an der rückwärtigen Keilfläche 22 und ein Kontakt der Schrägfläche 76 des Sicherungselements 38 an der vorderen Keilfläche 24 des Mitnahmebereichs 16 hergestellt wird. In der Eingriffslage des Sicherungselements 38 ist die Innenfläche 54 des Sicherungselements 38 zu der Grundfläche 18 des Mitnahmebereichs 16 beabstandet (vergleiche Figur 7).

Das Sicherungselement 38 ist vorzugsweise aus einem gehärteten Metallwerkstoff hergestellt, sodass es zuverlässig Kräfte übertragen kann, welche von der rückwärtigen Keilfläche 22 über die rückwärtige Kraftübertragungsfläche 50 auf die vordere Kraftübertragungsfläche 52 und von dort auf den vorderen Abschnitt 52 der Führungsfläche 44 wirken und in die Wandung 42 der Spannzange 26 eingeleitet werden.

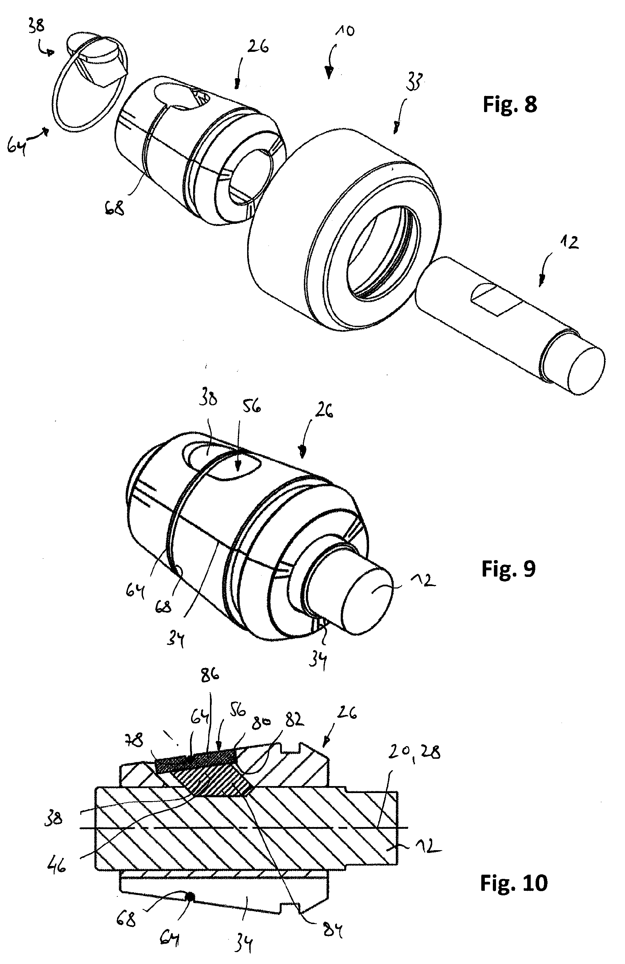

Nachfolgend wird unter Bezugnahme auf Figuren 8 bis 12 eine weitere Ausführungsform eines Werkzeughalters 10 beschrieben. Nachfolgend wird lediglich auf die Unterschiede zu den vorstehend beschriebenen Ausführungsformen eines Werkzeughalters 10 eingegangen. Im Übrigen wird hinsichtlich des Werkzeughalters 10 gemäß Figuren 8 bis 12 auf die vorstehende Beschreibung zu den Werkzeughaltern 10 gemäß Figuren 1 bis 7 Bezug genommen. Identische oder funktionsgleiche Bauteile tragen dieselben Bezugszeichen.

Bei dem Werkzeughalter 10 gemäß Figuren 8 bis 12 ist ebenfalls eine ringförmige Kraftbeaufschlagungseinrichtung 64 vorgesehen. Der Ringkörper ist im Querschnitt jedoch nicht rechteckförmig, sondern kreisförmig. Bei der Kraftbeaufschlagungseinrichtung 64 gemäß Figuren 8 bis 12 handelt es sich beispielsweise um einen O-Ring. Dieser O-Ring wirkt mit einer Ringnut 68 der Spannzange 26 zusammen, welche im Profil teilkreisförmig ist. Im Bereich der Außenfläche 56 des Sicherungselements 38 ist der O-Ring in einer im Profil teilkreisförmigen Aufnahme 78 aufgenommen. Die Aufnahme 78 ist bezogen auf die Außenfläche 56 des Sicherungselements 38 nach radial innen versetzt.

Das Sicherungselement 38 weist eine Schulter 80 auf, welche mit einer Begrenzungsfläche 82 der Spannzange 26 zusammenwirkt, sodass ein Bewegungsweg des Sicherungselements 38 längs der Bewegungsachse 46 in Richtung auf die zentrische Achse 28 der Spannzange 26 begrenzt ist.

Es ist möglich, dass das Sicherungselement 38 einstückig ist oder, wie in der Zeichnung gemäß Figuren 8 bis 12 dargestellt, aus zwei Elementen zusammengesetzt ist. Ein solches Sicherungselement weist ein als Auszugssicherung wirksames Keilelement 84 und ein Zusatzelement 86 auf, welches aus einem weicheren Material als das Keilelement 84 hergestellt sein kann. Beispielsweise ist das Zusatzelement 86 aus Messing, also aus einem vergleichsweise weichen Metall, hergestellt. Die Verwendung eines vergleichsweise weichen Metalls für das Zusatzelement 86 hat den Vorteil, dass eine freiliegende Außenfläche 56 des Zusatzelements 86 als Abstützung nach radial außen gegen eine insbesondere konische Aufnahmefläche einer aus einem härteren Metall hergestellten Spannzangenaufnahme dienen kann, und zwar ohne dass das Zusatzelement 86 die Aufnahmefläche beschädigt.

Bei dem Werkzeughalter 10 gemäß Figuren 8 bis 12 dient die Schulter 80 des Sicherungselements 38 durch Anlage an der Begrenzungsfläche 82 der Spannzange 26 dazu, den Bewegungsweg des Sicherungselements 38 längs der Bewegungsachse 46 nach radial innen zu begrenzen. Die Begrenzungsfläche 82 bewirkt gemeinsam mit der Schulter 80 eine Verliersicherung des Sicherungselements 38 gegen ein Herausfallen des Sicherungselements 38 nach radial innen, für den Fall, dass die Kraftbeaufschlagungseinrichtung 64 nicht (beispielsweise durch Verkleben) mit dem Sicherungselement 38 verbunden ist.

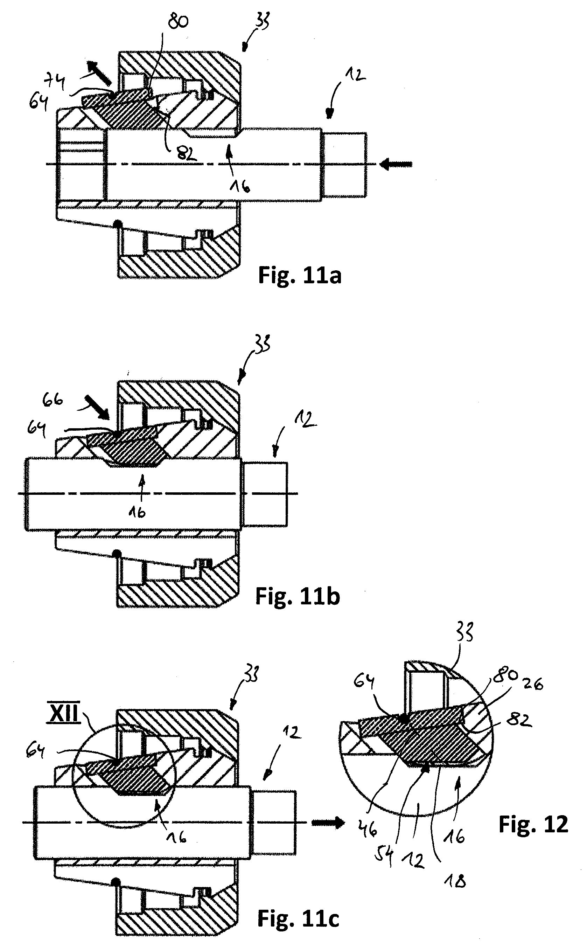

Die Funktionsweise des Werkzeughalters 10 gemäß Figuren 8 bis 12 ist zu der Funktionsweise der vorstehend unter Bezugnahme auf Figuren 1 bis 7 beschriebenen Werkzeughalter 10 identisch. Insbesondere kann auch ein Spielausgleich erfolgen, wie vorstehend unter Bezugnahme auf Figuren 4a bis 4c und Figur 5 beschrieben, wobei jedoch bedingt durch die Auflage der Schulter 80 an der Begrenzungsfläche 82 keine Anlage der Innenfläche 54 des Sicherungselements 38 an der Grundfläche 18 des Mitnahmebereichs 16 erfolgt (vergleiche Figuren 5 und 12).

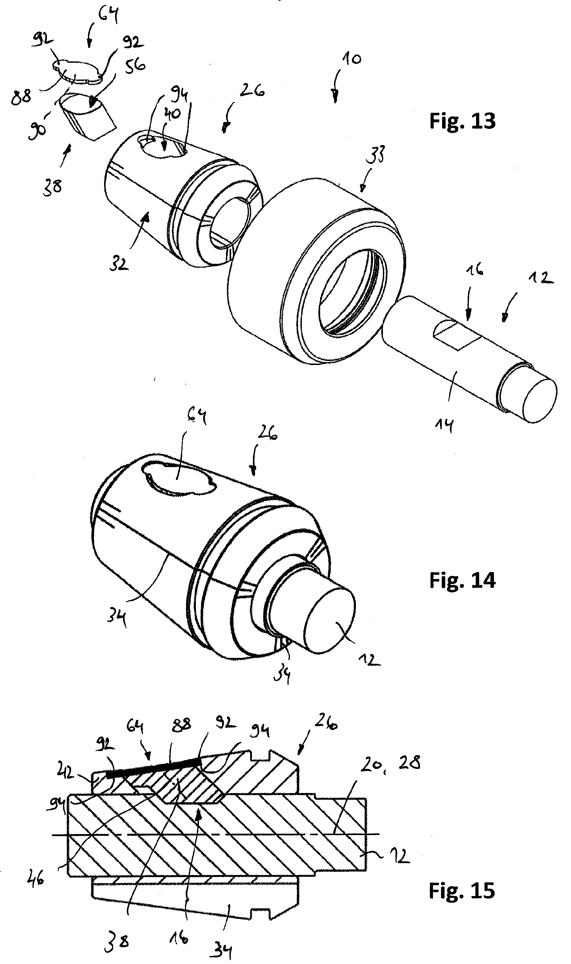

Eine weitere Ausführungsform eines Werkzeughalters 10 ist in den Figuren 13 bis 15 dargestellt. Mit Ausnahme der nachfolgend beschriebenen Unterschiede ist der Werkzeughalter 10 gemäß Figuren 13 bis 15 identisch zu den vorstehend beschriebenen Werkzeughaltern 10, auf deren Beschreibung Bezug genommen wird.

Der Werkzeughalter 10 gemäß Figuren 13 bis 15 umfasst eine Kraftbeaufschlagungseinrichtung 64, welche nicht ringförmig ausgebildet ist, sondern in Form eines Membrankörper 88 bereitgestellt ist. Der Membrankörper 88 ist mit einem Teilabschnitt seiner Unterseite 90 mit der Außenfläche 56 des Sicherungselements 38 verbunden, insbesondere verklebt.

Der Membrankörper 88 weist mindestens einen, vorzugsweise zwei oder mehr Befestigungsabschnitte 92 auf, welche sich über die Außenfläche 56 des Sicherungselements 38 hinaus erstrecken und in komplementären Aufnahmen 94 der Spannzange 26 angeordnet und dort mit der Wandung 42 der Spannzange 26 verbunden sind.

Der Membrankörper 88 ist aus einem elastischen Material hergestellt, sodass ausgehend von der in Figur 15 dargestellten Eingriffslage des Sicherungselements 38 mit einem Mitnahmebereich 16 des Werkzeugs 12 eine Überführung des Sicherungselements 38 in die Montagelage zu einer elastischen Verformung des Membrankörpers 88 führt, bei welcher der Membrankörper 88 im Bereich der Befestigungsabschnitte 92 zwar mit der Spannzange 26 verbunden bleibt, aber in einem der Bewegungsachse 46 zugeordneten Membranabschnitt nach radial außen aufgewölbt wird und hierdurch eine Verformungsenergie speichert. Diese Verformungsenergie steht dann zur Überführung des Sicherungselements 38 aus der radial äußeren Montagelage in die Eingriffslage (vergleiche Figur 15) zur Verfügung.

Bei dem Werkzeughalter 10 gemäß Figuren 13 bis 15 ist vorteilhaft, dass die Materialaussparung 40 und die Aufnahmen 94 mit demselben Werkzeug und in derselben Aufspannung einer Spannzange 26 spanend hergestellt werden können.

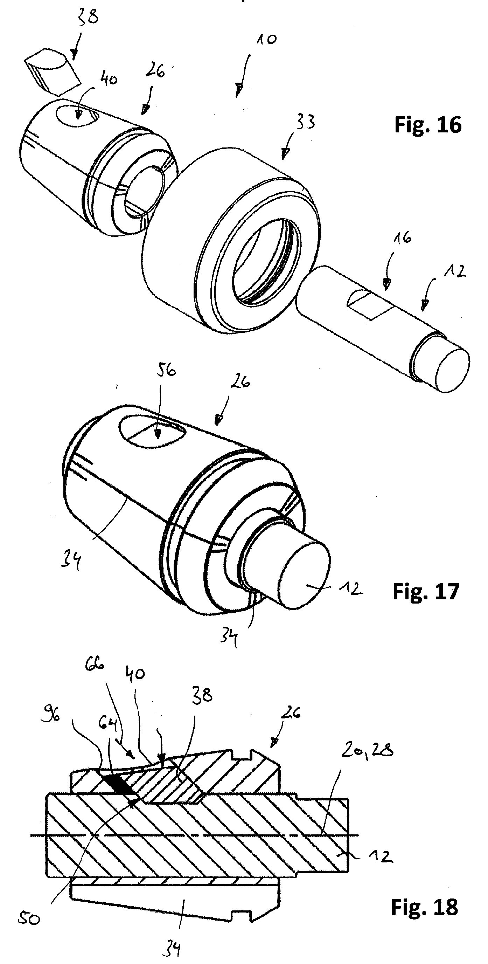

Ein weiteres Ausführungsbeispiel eines Werkzeughalters 10, bei welchem eine Kraftbeaufschlagungseinrichtung 64 mit einem nur geringen fertigungstechnischen Aufwand integriert werden kann, ist in den Figuren 16 bis 18 dargestellt. Im Unterschied zu dem Ausführungsbeispiel gemäß Figuren 13 bis 15 weist die Materialaussparung 40 der Spannzange 26 des Werkzeughalters 10 gemäß Figuren 16 bis 18 eine Materialaussparung 40 auf, welche keine zusätzlichen Aufnahmen zur Befestigung einer Kraftbeaufschlagungseinrichtung 64 hat. Vielmehr ist die Kraftbeaufschlagungseinrichtung 64 als blockförmiges Element innerhalb der Materialaussparung 40 angeordnet und insbesondere stoffschlüssig mit dem Sicherungselement 38 und der Wandung der Materialaussparung verbunden. Hierfür geeignete Flächen sind insbesondere eine rückwärtige Wandung 96 der Materialaussparung 40 und eine Fläche des Sicherungselements 38, welche in die rückwärtige Kraftübertragungsfläche 50 übergeht oder an diese angrenzt.

Die Kraftbeaufschlagungseinrichtung 64 ist vorzugsweise aus einem während der Herstellung flüssigen Elastomer hergestellt, das in die Materialaussparung 40 der Spannzange 26 eingebracht und dort in Kontakt mit der Wandung 96 und mit dem Sicherungselement 38 gelangt und dann aushärtet. Dabei ist das Sicherungselement 38 vorzugsweise in der Eingriffslage gehalten (oder zur Erhöhung einer Vorspannung noch weiter in Richtung zentraler Achse 28 positioniert), sodass nach Aushärtung des Elastomers eine Auslenkung des Sicherungselements 38 in die Montagelage zu einer elastischen Verformung der Kraftbeaufschlagungseinrichtung 64 führt. Eine auf diese Weise gespeicherte Energie kann dann zur Ausübung einer Fügekraft 66 und Überführung des Sicherungselements 38 aus der Montagelage in die Eingriffslage freigegeben werden.

## Patentansprüche

1. Werkzeughalter (10), mit einer mit einem Schaft (14) eines Werkzeugs (12) verspannbaren Spannzange (26), mit einer Auszugssicherung zur Sicherung des Werkzeugs (12) gegen ein Ausziehen aus der Spannzange (26), wobei die Auszugssicherung (36) ein Sicherungselement (38) zur Übertragung einer auf das Werkzeug (12) wirkenden Auszugskraft auf die Spannzange (26) umfasst, wobei das Sicherungselement (38) relativ zu der Spannzange (26) bewegbar gelagert ist, **dadurch gekennzeichnet, dass** das Sicherungselement (38) keilförmig ausgebildet ist und Kraftübertragungsflächen (48, 50) aufweist, mittels welchen das Sicherungselement (38) aufgrund seiner Keilform in seiner Eingriffslage mit dem Werkzeug (12) mit diesem und mit der Spannzange (26) selbsthemmend verspannbar oder verspannt ist, wobei die auf das Werkzeug wirkenden Spannkräfte der Spannzange (26) von dem Sicherungselement (38) nicht beeinflusst werden und das Sicherungselement (38) erst bei Überschreitung dieser Spannkräfte als Sperrglied wirksam wird.

2. Werkzeughalter (10) nach Anspruch 1, **dadurch gekennzeichnet, dass** das Sicherungselement (38) an der Spannzange (26) zwischen einer radial inneren Eingriffslage zum Eingriff des Sicherungselements (38) in einen seitlichen Mitnahmebereich (16) des Werkzeugs (12) und einer radial äußeren Montagelage zum Einführen des Schafts (14) in die Spannzange (26) bewegbar gelagert ist.

3. Werkzeughalter (10) nach einem der voranstehenden Ansprüche, **dadurch gekennzeichnet, dass** das Sicherungselement (38) längs einer geradlinigen Bewegungsachse (46) bewegbar ist.

4. Werkzeughalter (10) nach einem der voranstehenden Ansprüche, **dadurch gekennzeichnet, dass** die Bewegungsachse (46) relativ zu einer zu einer zentralen Achse (28) der Spannzange (26) senkrechten Achse (61) nach hinten geneigt ist, beispielsweise um einen Winkel (62) von 1° bis 89°, vorzugsweise um einen Winkel von 30° bis 60°, insbesondere um einen Winkel von 45°.

5. Werkzeughalter (10) nach einem der voranstehenden Ansprüche, **dadurch gekennzeichnet, dass** die Spannzange (26) eine Materialaussparung (40) aufweist, in welcher das Sicherungselement (38) verschiebbar aufgenommen ist.

6. Werkzeughalter (10) nach Anspruch 5, **dadurch gekennzeichnet, dass** die Materialaussparung (40) eine Führungsfläche (44) zur Führung des Sicherungselements (38) umfasst.

7. Werkzeughalter (10) nach Anspruch 5 oder 6, **dadurch gekennzeichnet, dass** die Materialaussparung (40) einen vorderen Abschnitt (52) aufweist, der mit einer vorderen Kraftübertragungsfläche (50) des Sicherungselements (38) zusammenwirkt.

8. Werkzeughalter (10) nach einem der Ansprüche 5 bis 7, **dadurch gekennzeichnet, dass** die Materialaussparung (40) zu einer äußeren Mantelfläche (32) der Spannzange (26) hin offen ist.

9. Werkzeughalter (10) nach einem der Ansprüche 5 bis 8, **dadurch gekennzeichnet, dass** die Materialaussparung (40) zur Definition der Eingriffslage und zur Begrenzung eines Bewegungswegs des Sicherungselements (38) eine Begrenzungsfläche (82) aufweist.

10. Werkzeughalter (10) nach einem der voranstehenden Ansprüche, **dadurch gekennzeichnet, dass** das Sicherungselement (38) mit einer insbesondere an der Spannzange (26) angeordneten Kraftbeaufschlagungseinrichtung (64) zusammenwirkt, welche eine in Richtung Eingriffslage wirkende Fügekraft (66) auf das Sicherungselement (38) zum Fügen des Sicherungselements (38) mit dem Mitnahmebereich (16) bereitstellt.

11. Werkzeughalter (10) nach Anspruch 10, **dadurch gekennzeichnet, dass** die Kraftbeaufschlagungseinrichtung (64) mit der Spannzange (26) verbunden ist.

12. Werkzeughalter (10) nach Anspruch 10 oder 11, **dadurch gekennzeichnet, dass** die Kraftbeaufschlagungseinrichtung (64) mittels Überführung des Sicherungselements (38) aus der Eingriffslage in die Montagelage aufladbar ist.

13. Werkzeughalter (10) nach einem der Ansprüche 10 bis 12, **dadurch gekennzeichnet, dass** die Fügekraft (66) eine Druckkraft ist.

14. Werkzeughalter (10) nach einem der Ansprüche 10 bis 13, **dadurch gekennzeichnet, dass** die Kraftbeaufschlagungseinrichtung (64) elastisch verformbar ist, insbesondere aus einem Elastomer hergestellt ist.

15. Werkzeughalter (10) nach einem der Ansprüche 10 bis 14, **dadurch gekennzeichnet, dass** die Kraftbeaufschlagungseinrichtung (64) ringförmig, ringsegmentförmig oder membranförmig ausgebildet ist.

16. Werkzeughalter (10) nach einem der Ansprüche 10 bis 15, **dadurch gekennzeichnet, dass** die Kraftbeaufschlagungseinrichtung (64) mit dem Sicherungselement (38) verbunden, insbesondere verklebt, ist.

## Claims

1. A tool holder (10) comprising a collet (26) configured to be clamped to the shank (14) of a tool (12), a pull-out protection configured to secure the tool (12) against being pulled out of the collet (26), the pull-out protection (36) including a protection element (38) for transmitting pull-out forces acting on the tool (12) to the collet (26), wherein the protection element (38) is mounted so as to be movable relative to the collet (26), **characterized in that** the protection element (38) has a wedge-shaped configuration and force-transmission surfaces (48, 50), wherein due to the wedge-shaped configuration, the protection element (38) - in a position engaged with the tool (12) - can be clamped or is clamped with the tool (12) and with the collet (26) in a self-locking manner, wherein the clamping forces of the collet (26) that act on the tool are not influenced by the protection element (38) and wherein the protection element (38) only has a function as a blocking element when these clamping forces are exceeded.

2. The tool holder (10) according to claim 1, **characterized in that** the protection element (38) is movably mounted on the collet (26) between a radially inner engaged position, which serves to engage the protection element (38) in a lateral drive flat (16) of the tool (12), and a radially outer assembly position, which serves to insert the shank (14) into the collet (26).

3. The tool holder (10) according to one of the preceding claims, **characterized in that** the protection element (38) is movable along a rectilinear axis of motion (46).

4. The tool holder (10) according to one of the preceding claims, **characterized in that** the axis of motion (46) is slanted toward the rear by an angle (62) of 1° to 89° relative to an axis (61) that is perpendicular to a central axis (28) of the collet (26), for example by an angle of 30° to 60°, preferably by an angle of 45°.

5. The tool holder (10) according to one of the preceding claims, **characterized in that** the collet (26) has a material recess (40) in which the protection element (38) is slidably accommodated.

6. The tool holder (10) according to claim 5, **characterized in that** the material recess (40) has a guide surface (44) to guide the protection element (38).

7. The tool holder (10) according to claim 5 or 6, **characterized in that** the material recess (40) has a front section (52) that interacts with a front force-transmission surface (50) of the protection element (38).

8. The tool holder (10) according to one of the claim 5 to 7, **characterized in that** the material recess (40) is open towards an outer circumferential surface (32) of the collet (26).

9. The tool holder (10) according to one of the claim 5 to 8, **characterized in that** the material recess (40) has a delimiting surface (82) for defining the radially inner engaged position and to limit the movement path of the protection element (38).

10. The tool holder (10) according to one of the preceding claims, **characterized in that** the protection element (38) interacts with a force-application device (64) which preferably is arranged on the collet (26) and which generates a joining force (66) that acts on the protection element (38) in the direction of the radially inner engaged position in order to join the protection element (38) to the drive flat (16).

11. The tool holder (10) according to claim 10, **characterized in that** the force-application device (64) is joined to the collet (26).

12. The tool holder (10) according to claim 10 or 11, **characterized in that** the force-application device (64) can be charged by moving the protection element (38) out of the radially inner engaged position into the radially outer assembly position.

13. The tool holder (10) according to one of the claims 10 to 12, **characterized in that** the joining force (66) is a compressive force.

14. The tool holder (10) according to one of the claims 10 to 13, **characterized in that** the force-application device (64) is elastically deformable and preferably is made of an elastomer.

15. The tool holder (10) according to one of the claims 10 to 14, **characterized in that** the force-application device (64) is configured to be ring-shaped, ring segment-shaped or in the form of a membrane.

16. The tool holder (10) according to one of the claims 10 to 15, **characterized in that** the force-application device (64) is joined to the protection element (38), preferably glued to the protection element (38).

## Revendications

1. Support d'outil (10) avec une pince de serrage (26) pouvant être serrée avec une tige (14) d'outil (12), avec une protection anti-retrait pour la sécurisation de l'outil (12) contre un retrait hors de la pince de serrage (26), la protection anti-retrait (36) comprenant un élément de protection (38) pour la transmission d'une force de retrait agissant sur l'outil (12) vers la pince de serrage (26), l'élément de protection (38) étant logé de manière mobile par rapport à la pince de serrage (26), **caractérisé en ce que** l'élément de protection (38) est cunéiforme et comprend des surfaces de transmission de force (48, 50) à l'aide desquelles l'élément de protection (38), du fait de sa forme de coin, peut être serré ou est serré, de manière auto-bloquante, dans sa position d'emboîtement avec l'outil (12), avec celui-ci et avec la pince de serrage (26), les forces de serrage de la pince de serrage (26) agissant sur l'outil n'étant pas influencées par l'élément de protection (38) et l'élément de protection (38) n'étant efficace en tant qu'organe de blocage que lors d'un dépassement de ces forces de serrage.

2. Support d'outil (10) selon la revendication 1, **caractérisé en ce que** l'élément de protection (38) est logé de manière mobile entre une position d'emboîtement radialement interne par rapport à l'emboîtement de l'élément de protection (38) dans un zone d'entraînement latérale (16) de l'outil (12) et dans une position de montage radialement externe par rapport à l'introduction de la tige (14) dans la pince de serrage (26).

3. Support d'outil (10) selon l'une des revendications précédentes, **caractérisé en ce que** l'élément de protection (38) est mobile le long d'un axe de mouvement (46) linéaire.

4. Support d'outil (10) selon l'une des revendications précédentes, **caractérisé en ce que** l'axe de mouvement (46) est incliné par rapport à un axe (61) perpendiculaire à un axe central (28) de la pince de serrage (26), par exemple avec un angle (62) de 1° à 89°, de préférence avec un angle de 30° à 60°, plus particulièrement avec un angle de 45°.

5. Support d'outil (10) selon l'une des revendications précédentes, **caractérisé en ce que** la pince de serrage (26) comprend un évidement (40) dans lequel l'élément de protection (38) est logé de manière mobile.

6. Support d'outil (10) selon la revendication 5, **caractérisé en ce que** l'évidement (40) comprend une surface de guidage (44) pour le guidage de l'élément de protection (38).

7. Support d'outil (10) selon la revendication 5 ou 6, **caractérisé en ce que** l'évidement (40) comprend une portion avant (52) qui interagit avec une surface de transmission de forces (50) de l'élément de protection (38).

8. Support d'outil (10) selon l'une des revendications 5 à 7, **caractérisé en ce que** l'évidement (40) est ouvert en direction d'une surface d'enveloppe externe (32) de la pince de serrage (26).

9. Support d'outil (10) selon l'une des revendications 5 à 8, **caractérisé en ce que** l'évidement (40) comprend, pour la définition de la position d'emboîtement et pour la limitation d'un trajet de mouvement de l'élément de protection (38), une surface de limitation (82).

10. Support d'outil (10) selon l'une des revendications précédentes, **caractérisé en ce que** l'élément de protection (38) interagit avec un dispositif d'application de forces (64) disposé plus particulièrement sur la pince de serrage (26), qui applique une force d'assemblage (66), agissant dans la direction de la position d'emboîtement, sur l'élément de protection (38) pour assembler l'élément de protection (38) avec la zone d'entraînement (16).

11. Support d'outil (10) selon la revendication 10, **caractérisé en ce que** le dispositif d'application de force (64) est relié avec la pince de serrage (26).

12. Support d'outil (10) selon la revendication 10 ou 11, **caractérisé en ce que** le dispositif d'application de force (64) peut être déplacé de la position d'emboîtement vers la position de montage au moyen d'un transfert de l'élément de protection (38).

13. Support d'outil (10) selon l'une des revendications 10 à 12, **caractérisé en ce que** la force d'assemblage (66) est une force de compression.

14. Support d'outil (10) selon l'une des revendications 10 à 13, **caractérisé en ce que** le dispositif d'application de force (64) est déformable élastiquement, plus particulièrement il est constitué d'un élastomère.

15. Support d'outil (10) selon l'une des revendications 10 à 14, **caractérisé en ce que** le dispositif d'application de force (64) présente une forme annulaire, la forme d'un segment annulaire ou la forme d'une membrane.

16. Support d'outil (10) selon l'une des revendications 10 à 15, **caractérisé en ce que** le dispositif d'application de force (64) est relié, plus particulièrement collé, à l'élément de protection (38).
